# EUROPÄISCHE PATENTANMELDUNG

(11) **EP 2 194 499 A1**
(43) Veröffentlichungstag der Anmeldung: **09.06.2010**
(21) Anmeldenummer: 09014729.9
(22) Anmeldetag: 26.11.2009
(51) Int. Cl.: G06Q 20/00

(54) **Verfahren zur Transaktionssicherung**

(30) Priorität: 27.11.2008 DE 102008059351
(71) Anmelder: Giesecke & Devrient GmbH, 81677 München (DE)
(72) Erfinder: Finkenzeller, Klaus, 85774 Unterföhring (DE); Belau, Markus, 81827 München (DE)

(57) **Zusammenfassung**

Bei einem Verfahren zum Sichern von Transaktionsdaten (30) werden diese von einem Nutzerendgerät (41) eines Nutzers (40) an eine Transaktionseinrichtung (50) übertragen. Dem Nutzer (40) wird eine TAN-Liste (10) mit indizierten, mehrstelligen Nutzer-TANs (220) bereitgestellt. Gemäß einem vorgegebenen Index (20) wählt der Nutzer (40) eine Nutzer-TAN (220) aus und überträgt diese zusätzlich zu den Transaktionsdaten (30) an die Transaktionseinrichtung (50). Die ausgewählte Nutzer-TAN (220) umfasst zumindest eine vorgegebene, zu ergänzende Stelle (221), welche der Nutzer (40) in einer vorgegebenen Weise in Abhängigkeit von zumindest einem vorgegebenen Anteil (231) der Transaktionsdaten (30) ergänzt.

## Beschreibung

Die vorliegende Erfindung betrifft ein Verfahren zum Sichern einer elektronischen Transaktion, insbesondere einer über ein Datenkommunikationsnetzwerk, wie zum Beispiel das Internet, durchgeführte Transaktion.

Elektronische Transaktionen der genannten Art sind beispielsweise Transaktionen im Online-Banking, wie das Durchführen einer Überweisung oder dergleichen. Es ist bekannt, dass derartige Transaktionen mittels eines TAN-basierten Verfahrens gesichert werden können. Dabei meldet sich ein Nutzer über ein Nutzerendgerät, beispielsweise einen PC oder ein Mobilfunkendgerät, bei einer Transaktionseinrichtung der Bank, wie z.B. einem Bank-Server, mittels geeigneter Kenndaten und einer PIN zur Authentisierung an und überträgt dann die für die durchzuführende Transaktion relevanten Transaktionsdaten an den Bank-Server. Bei einer Überweisung sind dies beispielsweise die Kontonummer und die Bankleitzahl des Empfängers sowie der zu überweisende Betrag. Der Bank-Server fordert daraufhin den Nutzer auf, die übermittelten Daten mittels einer über einen Index (Nummer) definierten TAN (Transaktionsnummer) zu bestätigen, wobei dem Nutzer eine indizierte Liste mit entsprechenden TANs vorliegt, die ihm von der Bank zu einem früheren Zeitpunkt bereitgestellt worden ist. Der Nutzer übermittelt die durch den Index bestimmte TAN an den Bank-Server, welcher die Transaktion, hier also die Überweisung, ausführt, sofern er die korrekte TAN zu dem Index empfangen hat.

Dieses Verfahren weist allerdings gravierende Sicherheitsmängel auf, wenn das Nutzerendgerät, mittels dessen die Datenkommunikation mit dem Bank-Server aufbaut und durchführt wird, von Schadcode, beispielsweise einem Trojaner oder dergleichen, befallen ist. In einem solchen Fall versucht ein unberechtigter Dritter mittels des Schadcodes die während der Transaktion zwischen dem Nutzerendgerät und dem Bank-Server ablaufende Datenkommunikation zu belauschen und die Transaktionsdaten zu verändern, indem beispielsweise die Kontodaten des Empfängers mit denjenigen des Dritten vertauscht werden. Ein solcher Angriff wird auch Man-in-the-Middle-Angriff genannt, da der Dritte quasi zwischen den beiden eigentlichen Kommunikationspartnern, dem Nutzerendgerät und dem Bank-Server, sitzt und sämtliche gesendeten Nachrichten lesen und verändern kann, im Allgemeinen ohne dass dies für die beiden Kommunikationspartner erkennbar wäre. In dem oben geschilderten Verfahren kann der Dritte die vom Nutzer gesendeten Transaktionsdaten verändert zum Bank-Server weiterleiten, den von der Bank zum Nutzer gesendeten Index sowie die vom Nutzer daraufhin gesendete TAN zu dem Index aber jeweils unverändert passieren lassen. Auf diese Weise ist der Angriff sowohl für den Bank-Server als auch für den Nutzer nicht erkennbar und der Bank-Server wird die Überweisung mit den geänderten Transaktionsdaten zuungunsten des Nutzers durchführen.

Um derartigen Angriffen zu begegnen, sind technische Vorkehrungen getroffen worden. Dem Nutzer kann beispielsweise ein so genannter TAN-Generator bereitgestellt werden, der mittels geheimer Authentisierungsdaten des Nutzers personalisiert wird. Der Nutzer kann dann mittels des TAN-Generators zu jeder durchzuführenden Transaktion eine transaktionsspezifische TAN generieren, d.h. die generierte TAN ist jeweils von den Transaktionsdaten der zu sichernden Transaktion abhängig. Die derart erzeugte TAN ist in der Regel von weiteren Parametern abhängig, beispielsweise den in dem TAN-Generator gespeicherten Authentisierungsdaten bzw. einem von diesen Daten abgeleiteten Schlüssel. Diese transaktionsspezifische TAN wird vom Nutzer wie vorstehend beschrieben an den Bank-Server übertragen. Ein Verändern der Transaktionsdaten durch den Dritten kann nun vom Bank-Server erkannt werden, da die TAN nicht mehr zu den veränderten Transaktionsdaten passt. Auf der anderen Seite ist es für den Dritten praktisch nicht möglich, auch die TAN in der Weise zu verändern, dass diese für die veränderten Transaktionsdaten gültig wäre, da er beispielsweise nicht im Besitz der geheimen Authentisierungsdaten des Nutzers ist, welche zum Erzeugen der TAN mit herangezogen werden. Ein solches Verfahren bietet zwar eine größere Sicherheit gegen die beschriebenen Angriffe, ist aber mit hohen Kosten verbunden. Jeder Nutzer muss mit einem technisch aufwändigen TAN-Generator ausgestattet werden, welcher zusätzlich für jeden Nutzer zu personalisieren ist.

In DE 102004060976 A1 wird beschrieben, eine Auftragsquersumme in ein Mobilfunkgerät einzugeben und als Basis zur Berechnung einer transaktionsspezifischen TAN durch einen TAN-Generator in dem Mobilfunkgerät zu verwenden. Gemäß WO 2008/080173 A2 sendet ein Nutzer in einer SMS die Transaktionsdaten zusammen mit der zu prüfenden TAN an eine Transaktionseinrichtung.

Gemäß einem weiteren Verfahren empfängt der Nutzer während einer durchzuführenden Transaktion eine in der Regel ebenfalls transaktionsabhängige TAN über einen separaten Kommunikationsweg, der verschieden ist von dem Kommunikationsweg, über den die Transaktion gerade vorgenommen wird. Der Bank-Server sendet eine entsprechende TAN beispielsweise im Rahmen einer SMS-Nachricht an den Nutzer ("mobile TAN"). Nachteilig hieran ist, dass der Nutzer stets ein funktionsfähiges Mobilfunkendgerät zusätzlich zu dem Nutzerendgerät benötigt, um die Transaktion durchzuführen, denn das Verwenden des Nutzerendgeräts selbst zum Empfangen der TAN ist aus Sicherheitsgründen zu vermeiden. Weiterhin können bei der Übertragung der TAN unerwünschte Verzögerungen auftreten.

Es ist demnach Aufgabe der vorliegenden Erfindung, ein TAN-basiertes Verfahren vorzuschlagen, welches einfach und kostengünstig durchzuführen ist und gleichzeitig weitgehenden Schutz gegen die beschriebenen Angriffe bietet.

Diese Aufgabe wird durch ein Verfahren mit den Merkmalen des unabhängigen Anspruchs gelöst. Vorteilhafte Ausgestaltungen und Weiterbildungen werden in den abhängigen Ansprüchen angegeben.

Es ist ein Grundgedanke der vorliegenden Erfindung, dass mit Hilfe der Transaktionsdaten und einer bereitgestellten TAN, die beispielsweise aus einer TAN-Liste ausgewählt wird, eine transaktionsspezifische TAN zu bilden ist. Die bereitgestellte TAN enthält dabei eine Vorgabe, wie die transaktionsspezfische TAN zu bilden ist.

Als Vorgaben können in der ausgewählten TAN die Angaben enthalten sein, welche Stelle(n) der TAN zu ergänzen sind, welcher Teil der Transaktionsdaten zu verwenden ist und/oder sogar wie die TAN zu ergänzen ist (Bildungsvorschrift).

Da das Ergänzen der TAN durch den Benutzer erfolgt, sollten die Vorgaben besonders einfach gewählt sein. Der Nutzer kann seine TAN, die als Nutzer-TAN bezeichnet wird, und/oder eine TAN einer Transaktionseinrichtung, die als Transaktionseinrichtungs-TAN oder Bestätigungs-TAN bezeichnet wird, transaktionsspezifisch bilden.

Eine TAN-Liste ist vorzugsweise eine indizierte TAN-Liste ist, aus der durch Vorgabe eines Index die dem Index zugeordnete TAN auswählbar ist. Ein TAN-Generator kann eine TAN-Liste vorab speichern oder eine TAN dynamisch erzeugen. Die TAN des TAN-Generators wird dem Benutzer angezeigt. Besonders vorteilhaft ist es, wenn der TAN-Generator als tragbarer Datenträger zu diesem Zweck eine Anzeigevorrichtung aufweist.

Bei einer Ausgestaltung des erfindungsgemäßen Verfahrens zum Sichern von Transaktionsdaten werden diese von einem Nutzerendgerät eines Nutzers an eine Transaktionseinrichtung übertragen. Dem Nutzer wird eine TAN bereitgestellt. Beispielsweise wird ihm eine TAN-Liste mit indizierten, mehrstelligen Nutzer-TANs bereitgestellt. Gemäß einem vorgegebenen Index wählt der Nutzer dann eine Nutzer-TAN aus. Die bereitgestellte TAN wird zusätzlich zu den Transaktionsdaten an die Transaktionseinrichtung übertragen.

Erfindungsgemäß umfasst die bereitgestellte (Nutzer-)TAN zumindest eine vorgegebene, zu ergänzende Stelle, welche der Nutzer in einer vorgegebenen Weise in Abhängigkeit von zumindest einem vorgegebenen Anteil der Transaktionsdaten ergänzt.

Da die zumindest eine zu ergänzende, d.h. variable Stelle der Nutzer-TAN durch den Nutzer in vorgegebener Weise mittels transaktionsabhängigen Daten ergänzt wird, wird die Nutzer-TAN selbst, nach dem Ergänzen der variablen Stellen, transaktionsabhängig. Einem potentiellen Angreifer, der die Datenkommunikation zwischen der Transaktionseinrichtung und dem Nutzerendgerät belauscht, ist es kaum möglich zu erraten, welche Stellen der Nutzer-TAN variable Stellen sind und dementsprechend vom Nutzer abhängig von dem vorgegebenen Anteil der Transaktionsdaten ergänzt worden sind. Der Angreifer kann die ergänzten Stellen nicht von den Stellen unterscheiden, die der Nutzer unverändert gelassen hat, da diese Stellen der Nutzer-TAN als nicht variabel vorgesehen waren. Weiterhin ist es für den Angreifer nicht möglich zu erkennen, nach welcher Vorschrift der Anteil der Transaktionsdaten vorgegeben ist, in Abhängigkeit dessen die zu ergänzenden Stellen der Nutzer-TAN durch den Nutzer ergänzt werden. Schließlich bleibt es dem Angreifer verborgen, in welcher Weise der vorgegebene Anteil der Transaktionsdaten verwendet wird, um die variablen Stellen der Nutzer-TAN zu ergänzen. Deshalb ist es für den Angreifer nahezu unmöglich, eine abgefangene Nutzer-TAN in einer Weise zu verändern, dass die Transaktionseinrichtung diese veränderte Nutzer-TAN als gültige Nutzer-TAN zu ebenfalls von dem Angreifer veränderten Transaktionsdaten akzeptieren würde. Somit stellt das erfindungsgemäße TAN-basierte Verfahren ein einfaches und kostengünstiges Verfahren bereit, mittels dessen elektronische Transaktionen gegen Man-in-the-Middle-Angriffe gesichert werden können. Eine zusätzliche technische Infrastruktur ist nicht erforderlich. Für den Nutzer unterscheidet sich das Verfahren nur geringfügig von bekannten TAN-basierten Verfahren, die eine indizierte TAN-Liste ("iTAN-Verfahren") verwenden. Der von dem Nutzer zusätzlich durchzuführende Schritt, das Ergänzen der zumindest einen zu ergänzenden Stelle gemäß den Vorgaben, ist bereits vollständig und eindeutig durch das Verfahren determiniert. Sämtliche Vorgaben des Verfahrens sind vom Nutzer lediglich mechanisch umzusetzen. Dementsprechend gering sind die Änderungen, die an einer Transaktionseinrichtung vorzunehmen sind, welche bisher zur Abwicklung entsprechender konventioneller iTAN-Verfahren eingerichtet war.

Die Transaktionseinrichtung kann einen Empfang der Transaktionsdaten von dem Nutzerendgerät bestätigen, indem sie eine Bestätigungs-TAN an das Nutzerendgerät überträgt. Diese Bestätigungs-TAN ist der ausgewählten Nutzer-TAN, beispielsweise über die TAN-Liste gemäß dem vorgegebenen Index zugeordnet, d.h. die TAN-Liste umfasst dann zu jedem Index sowohl eine Nutzer-TAN als auch eine Bestätigungs-TAN. Vorzugsweise umfasst auch die Bestätigungs-TAN zumindest eine vorgegebene, zu ergänzende Stelle, welche von der Transaktionseinrichtung in einer vorgegebenen Weise in Abhängigkeit von zumindest einem weiteren vorgegebenen Anteil der Transaktionsdaten ergänzt wird. Dieser weitere Anteil ist in der Regel verschieden ist von dem vorstehend beschriebenen vorgegeben Anteil, abhängig vom welchem der Nutzer die variablen Stellen der Nutzer-TAN ergänzt.

Empfängt der Nutzer die Bestätigungs-TAN, so kann er gemäß der nachstehend genauer beschriebenen bevorzugten Ausführungsform des erfinddungsgemäßen Verfahrens davon ausgehen, dass die Transaktionseinrichtung die Transaktionsdaten in korrekter, unveränderter Form empfangen hat. Im gegenteiligen Fall hätte die Transaktionseinrichtung einen Angriff der beschriebenen Form aufgrund einer fehlerhaften Nutzer-TAN erkannt und die Transaktion abgebrochen. Der Nutzer kann somit einen Angriff direkt erkennen; er empfängt dann nämlich keine Bestätigungs-TAN. Das Vorsehen von zu ergänzenden Stellen in der Bestätigungs-TAN erhöht die Sicherheit des Verfahrens nochmals beträchtlich. Sollte es dem Angreifer wider Erwarten einmal gelingen, die Transaktionsdaten und die Nutzer-TAN konsistent zu verändern, d.h. die zu ergänzenden Stellen korrekt zu erraten und in der richtigen Weise durch den vorgegebenen Anteil der (veränderten) Transaktionsdaten, die ja dann auch der Transaktionseinrichtung in veränderter Form vorliegen, zu ergänzen, so ist doch die Wahrscheinlichkeit minimal, dass ihm dies mit der Bestätigungs-TAN im Rahmen derselben Transaktion nochmals gelingt. Spätestens an dieser Stelle kann dann ein Angriff auf die Transaktion erkannt werden.

Vorzugsweise wird die TAN dem Nutzer derart bereitgestellt, dass die zumindest eine zu ergänzende Stelle der Nutzer-TAN, der zumindest eine Anteil der Transaktionsdaten und die Weise, in der die zumindest eine zu ergänzende Stelle in Abhängigkeit von dem zumindest einen Anteil der Transaktionsdaten zu ergänzen ist, bereits mittels der TAN selbst eindeutig vorgegeben. In gleicher Weise gibt die TAN die zumindest eine zu ergänzende Stelle der Bestätigungs-TAN, den zumindest einen weiteren Anteil der Transaktionsdaten und die Weise, in der diese zumindest eine zu ergänzende Stelle in Abhängigkeit von dem zumindest einen weiteren Anteil der Transaktionsdaten zu ergänzen ist, eindeutig vor. Der Nutzer kann also ohne weitere Hilfsmittel, beispielsweise alleine mit Hilfe der TAN-Liste, das Verfahren ausführen, wie es ihm bereits von herkömmlichen TAN-basierten Verfahren bekannt ist.

Die Vorgaben bezüglich der zu ergänzenden Stellen in Nutzer-TAN und/oder Bestätigungs-TAN sowie bezüglich der Anteile der Transaktionsdaten, in Abhängigkeit derer diese variablen Stellen zu ergänzen sind, können aber auch durch weitere einfache Hilfsmittel, die dem Nutzer getrennt von der TAN-Liste vorliegen, gegeben sein. Beispielsweise kann eine weitere Liste in Form einer Schablone dazu dienen, die zu ergänzenden Stellen in der Nutzer-TAN und/oder der Bestätigungs-TAN zu kennzeichnen, wenn diese Liste auf eine in Papierform vorliegende TAN-Liste gelegt wird. In ähnlicher Weise können die Anteile der Transaktionsdaten und die Abhängigkeit der ergänzten Stellen von den vorgegebenen Transaktionsdaten vorgegeben werden. Dazu können zusätzliche Schablonen, Tabellen oder dergleichen bereitgestellt werden. Diese erleichtern ein Bestimmen der vorgegebenen Anteile der Transaktionsdaten (z.B. durch Auswahl bestimmter Stellen aus einer mehrstelligen Zeichenkette) oder eine Umsetzung vorgegebener Abhängigkeiten zwischen Zeichen der Transaktionsdaten, die den vorgegeben Anteilen entsprechen, und den tatsächlich in die variablen Stellen einzusetzenden Zeichen (z.B. durch Chiffrieren oder Verwürfeln von Zahlen und/oder Buchstaben).

In einer bevorzugten Ausführungsform des Verfahrens wird die TAN derart bereitgestellt, dass die zumindest eine Stelle der Nutzer-TAN dadurch vorgegeben ist, dass sie einen Verweis auf die Transaktionsdaten umfasst, d.h. das Vorhandensein dieses Verweises zeichnet die Stelle als zu ergänzende Stelle aus. In gleicher Weise wird die zumindest eine zu ergänzende Stelle der Bestätigungs-TAN vorgegeben, d.h. auch diese Stelle umfasst einen Verweis in die Transaktionsdaten. Der jeweilige Verweis nun gibt den Anteil der Transaktionsdaten bzw. den weiteren Anteil der Transaktionsdaten vor, in Abhängigkeit dessen die variable Stelle der Nutzer-TAN bzw. der Bestätigungs-TAN zu ergänzen ist. Der jeweilige Verweis bezeichnet also den entsprechenden Anteil der Transaktionsdaten. Schließlich kann der Verweis, den die variable Stelle der Nutzer-TAN umfasst, zusätzlich die Weise angeben, in welcher die zu ergänzende Stelle der Nutzer-TAN in Abhängigkeit von dem durch den Verweis vorgegebene Anteil der Transaktionsdaten ergänzt wird. Analoges gilt für den Verweis auf den weiteren Anteil der Transaktionsdaten, den die zu ergänzende Stelle der Bestätigungs-TAN umfasst. Auf diese Weise sind sämtliche Vorgaben, welche der Nutzer benötigt, um das Verfahren durchzuführen, eindeutig und in kompakter Weise festgelegt.

Die Stellen einer TAN umfassen in der Regel einzelne Zeichen, meist Ziffern oder Buchstaben, aber auch andere Zeichen, beispielsweise Sonderzeichen, sind möglich. In einer Variante des Verfahrens wird die TAN deshalb derart bereitgestellt, dass der zumindest eine Anteil der Transaktionsdaten dadurch vorgegeben wird, dass der Verweis, den eine variable Stelle der Nutzer-TAN umfasst, ein einzelnes Zeichen einer die Transaktionsdaten repräsentierenden, mehrstelligen Zeichenkette vorgibt. In gleicher Weise gibt ein Verweis, welche in einer zu ergänzenden Stelle der Bestätigungs-TAN vorliegt, den weiteren Anteil der Transaktionsdaten vor. Es ist gleichfalls möglich, dass ein entsprechender Verweis nicht lediglich ein Zeichen wie beschrieben vorgibt, sondern beispielsweise mehrere benachbarte oder nicht benachbarte Zeichen der entsprechenden Zeichenkette oder dergleichen.

Gemäß einer Variante des Verfahrens gibt ein vorstehend beschriebener Verweis vor, dass an der zu ergänzenden Stelle der Nutzer-TAN bzw. der Bestätigungs-TAN, welche den Verweis umfasst, dasjenige Zeichen der die Transaktionsdaten repräsentierenden Zeichenkette einzusetzen ist, welches der Verweis wie beschrieben vorgibt. Der Verweis gibt also vor, dass das von ihm vorgegebene Zeichen identisch an der variable Stelle eingesetzt wird. Analoges ist möglich, wenn der Verweis mehrere Zeichen aus der Zeichenkette vorgibt, welche den Transaktionsdaten entspricht. Dann werden an der entsprechenden, zu ergänzenden Stelle der Nutzer-TAN bzw. Bestätigungs-TAN, welche den Verweis umfasst, diese mehreren Zeichen unverändert eingesetzt. Die Stelligkeit der entsprechenden TAN verändert sich dabei.

Gemäß einer anderen Variante kann der Verweis vorgeben, dass das oder die Zeichen der die Transaktionsdaten repräsentierenden Zeichenkette, welches oder welche der Verweis vorgibt, chiffriert oder verwürfelt werden, bevor es oder sie an die zu ergänzende Stelle der Nutzer-TAN bzw. der Bestätigungs-TAN eingesetzt wird oder werden. Auf diese Weise wird es z.B. möglich, auch Anteile von Transaktionsdaten, die in Form von Buchstaben vorliegen, unauffällig in solche TANs ergänzend einzusetzen, deren nicht variable Stellen ausschließlich mit Ziffern besetzt sind. Dabei werden die betreffenden Buchstaben vor dem Einsetzen gemäß den Vorgaben des Verweisen zu Ziffern umcodiert werden. Der Verweis kann dazu beispielsweise die Verwendung einer Chiffrier-Tabelle oder dergleichen vorsehen, die sich zusätzlich auf der TAN-Liste befindet oder dem Nutzer getrennt davon vorliegt. Es wird auf diese Weise auch möglich, eventuelle Ungleichverteilungen der Ziffern/Buchstaben der vorgegebenen Anteile der Transaktionsdaten zu korrigieren bzw. einer Verteilung der Ziffern/Buchstaben der nicht variablen Stellen der Nutzer-TANs bzw. der Bestätigungs-TANs anzupassen.

Verschiedene Nutzer-TANs können unterschiedlich viele Stellen aufweisen. Gleiches gilt für die Bestätigungs-TANs. Demnach können auch die Stellenanzahl von Nutzer-TANs und Bestätigungs-TANs verschieden sein. Gleichfalls variabel ist die Anzahl der zu ergänzenden Stellen, die verschiedene Nutzer-TANs und verschiedene Bestätigungs-TANs aufweisen können. Auch die Position, an der die zumindest eine zu ergänzende Stelle innerhalb einer Nutzer-TAN und/oder Bestätigungs-TAN auftritt, ist variabel. D.h. verschiedene Nutzer-TANs und verschiedene Bestätigungs-TANs können sich sowohl untereinander als auch bezüglich des jeweils anderen TAN-Typs sowohl in der Anzahl als auch den Positionen zu ergänzender Stellen unterscheiden.

Sobald die Transaktionseinrichtung die Transaktionsdaten sowie die ergänzte Nutzer-TAN von dem Nutzerendgerät empfangen hat, prüft die Transaktionseinrichtung die empfangenen Daten. Als ergänzte Nutzer-TAN wird dabei die Nutzer-TAN bezeichnet, deren zumindest eine zu ergänzende Stelle von dem Nutzer in Abhängigkeit vom dem zumindest einen vorgegebenen Anteil der Transaktionsdaten in der vorgegebenen Weise ergänzt worden ist. Insbesondere prüft die Transaktionseinrichtung eine Übereinstimmung zwischen der empfangenen, ergänzten Nutzer-TAN und der - beispielsweise gemäß dem vorgegebenen Index von der TAN-Liste - auszuwählenden Nutzer-TAN. Dabei prüft die Transaktionseinrichtung, ob die zumindest eine ergänzte Stelle der empfangenen Nutzer-TAN in der vorgegebenen Weise in Abhängigkeit von dem zumindest einen vorgegebenen Anteil der empfangenen Transaktionsdaten korrekt ergänzt ist. Sofern Übereinstimmung vorliegt, wenn also kein die Transaktionsdaten und die Nutzer-TAN verändernder Angriff zu erkennen ist, führt die Transaktionseinrichtung eine durch die Transaktionsdaten definierte Transaktion aus.

Transaktionen dieser Art treten beispielsweise beim Online-Banking auf, sind aber nicht darauf beschränkt. Die Transaktionsdaten umfassen beispielsweise Kontodaten (BLZ, Kontonummer) des Empfängers einer Überweisung, welche der Nutzer im Rahmen des Verfahrens anweisen möchte. Dementsprechend ist hier die Transaktionseinrichtung ein Server einer Bank, das Nutzerendgerät des Nutzers ein PC, Notebook, Netbook, Mobilfunkendgerät oder dergleichen, welches über das Internet mit dem Bank-Server in Verbindung steht. Transaktionsdaten enthalten in der Regel eine Vielzahl von Stellen. Transaktionsnummern enthalten dagegen typischer weise nur 4 bis 12 Stellen, vorzugsweise 8 bis 12 Stellen. Zur Ausführung der Transaktion ist zumindest ein vollständiger erster Teil der Transaktionsdaten notwendig (z.B.: Betrag, Kontonummer und BLZ des Empfängers). Die ggf. zur Identifikation einer Transaktion im Transaktionssystem benötigten Daten (Transaktionsidentifikation) werden in der Regel nicht als Transaktionsnummer (TAN) im vorliegenden Sinne verwendet. Die Transaktionsdaten können ferner umfassen: eine Prüfsumme (oder Signatur) für die restlichen Transaktionsdaten.

Ein Angreifer kann bei einem konstruktiven Angriff zwar beliebige Beträge verwenden, nicht aber beliebige Kontonummern (und/oder Bankleitzahlen) verwenden. Somit sollten vorzugsweise als Transaktionsdaten die Kontonummer (und die Bankleitzahl) verwendet werden, so dass zumindest eine Stelle der Kontonummer als Transaktionsdaten in der bereitgestellten TAN zu ergänzen ist.

In bevorzugten Ausführungsformen wird durch die Vorgabe eine vorgegebene Anzahl von Stellen der TAN variabel, d.h. transaktionsspezifisch, gestaltet. Vorzugsweise sind in jeder TAN zumindest 2 Stellen variabel ausgestaltet. Es ist besonders vorteilhaft 3 von 8 Stellen, 3 von 10 oder 4 von 12 Stellen der TAN variabel zu gestalten. Der bevorzugte variable Anteil der Stellen der TAN liegt bei 27 bis 38 Prozent.

Empfängt der Nutzer die von der Transaktionseinrichtung in Abhängigkeit von dem zumindest einen weiteren Anteil der Transaktionsdaten ergänzte Bestätigungs-TAN mittels des Nutzerendgeräts, so prüft auch er die empfangenen Daten, um zu erkennen, ob die Transaktionsdaten von der Transaktionseinrichtung korrekt empfangen worden sind. Dabei prüft der Nutzer, ob die zumindest eine ergänzte Stelle der empfangenen Bestätigungs-TAN in der vorgegebenen Weise in Abhängigkeit von dem zumindest einen weiteren vorgegebenen Anteil der übertragenen Transaktionsdaten korrekt ergänzt ist. Ist dies der Fall, so kann der Nutzer mit großer Sicherheit annehmen, dass die Transaktion in der gewünschten Weise durch die Transaktionseinrichtung ausgeführt wird und kein Angriff vorliegt. Falls der Nutzer eine veränderte Bestätigungs-TAN oder überhaupt keine Bestätigungs-TAN empfängt, so ist die Transaktion gestört worden. Dies ist für den Nutzer sofort zu erkennen und er kann entsprechenden darauf reagieren.

Die bis zu dieser Stelle beschriebenen Verfahrensschritte können gemäß verschiedener Varianten des Verfahrens in verschiedenen Reihenfolgen durchgeführt werden. Gemäß einer bevorzugten Variante überträgt der Nutzer in einem ersten Schritt die Transaktionsdaten an die Transaktionseinrichtung. Diese gibt den genannten Index, gemäß dessen der Nutzer in einem späteren Schritt die Nutzer-TAN aus der TAN-Liste auswählt, vor und überträgt diesen Index an das Nutzerendgerät.

Der Index kann von der Transaktionseinrichtung - in dieser und anderen Varianten des Verfahrens - abhängig von den empfangenen Transaktionsdaten vorgegeben werden. Auf diese Weise ist es möglich, mittels des so vorgegebenen Index eine auszuwählende Nutzer-TAN dergestalt vorzugeben, dass, wenn die variablen Stellen entsprechend den Vorgaben vom Nutzer ergänzt worden sind, die variablen Stellen der ergänzten Nutzer-TAN sowie der vorgegebene Anteil der Transaktionsdaten von einem potentiellen Angreifer nur mit außerordentlich geringer Wahrscheinlichkeit erraten werden können. Es ist aber auch möglich, dass die Transaktionseinrichtung den Index aufgrund alternativer Verfahren, beispielsweise zufällig, vorgibt.

Hat der Nutzer also den Index von der Transaktionseinrichtung empfangen und die Nutzer-TAN verfahrensgemäß in Abhängigkeit von dem zumindest einen vorgegebenen Anteil der Transaktionsdaten ergänzt, überträgt er die ergänzte Nutzer-TAN mittels des Nutzerendgeräts an die Transaktionseinrichtung. Gemäß einer abweichenden Variante ist es möglich, dass der Nutzer selbst den Index vorgibt, nach einem vorstehend beschriebenen Verfahren oder abweichend davon, und diesen Index zusammen mit den Transaktionsdaten oder der ergänzten Nutzer-TAN an die Transaktionseinrichtung überträgt.

Die Transaktionseinrichtung prüft die Nutzer-TAN wie beschrieben, führt, falls sie keinen Angriff erkennt, die entsprechende Transaktion aus und sendet zur Bestätigung dessen die wie vorstehend beschrieben ergänzte Bestätigungs-TAN an das Nutzerendgerät.

In einem abschließenden Schritt prüft der Nutzer diese Bestätigungs-TAN entsprechend dem Vorstehenden.

Gemäß einer abweichenden Variante kann der Nutzer, nachdem er von der Transaktionseinrichtung auf Anforderung den Index empfangen hat oder diesen selbst vorgegeben hat, die gemäß diesem Index ausgewählte Nutzer-TAN entsprechend den beschriebenen Vorgaben in Abhängigkeit der noch zu übertragenden Transaktionsdaten ergänzen und vor dem Übertragen der Transaktionsdaten an die Transaktionseinrichtung übertragen. Dies macht es einem potentiellen Angreifer noch schwerer, die variablen Stellen der Nutzer-TAN sowie den vorgegebenen Anteil der Transaktionsdaten zu erraten, da der Angreifer zum Zeitpunkt des Übertragens der Nutzer-TAN noch keinerlei Kenntnis der Transaktionsdaten besitzt. Diese überträgt der Nutzer in einem weiteren, späteren Schritt an die Transaktionseinrichtung.

Gemäß einer weiteren abweichenden Variante kann die Transaktionseinrichtung, nachdem sie die Transaktionsdaten von dem Nutzerendgerät empfangen hat, bereits die Bestätigungs-TAN gemäß den Vorgaben ergänzen und zusammen mit dem vorgegebenen Index an das Nutzerendgerät senden. In dieser Variante bestätigt die Bestätigungs-TAN also lediglich den Empfang der Transaktionsdaten. Es obliegt dem Nutzer, anhand der empfangenen Bestätigungs-TAN genau zu prüfen, ob die Transaktionseinrichtung die korrekten, unveränderten Transaktionsdaten empfangen hat. Es ist vorteilhaft, in dieser Ausführungsform Bestätigungs-TANs vorzusehen, welche zu ergänzende Stellen aufweisen. Nur so kann sichergestellt werden, dass ein Angriff auf eine von dem Nutzerendgerät empfangene Bestätigungs-TAN vom Nutzer erkannt wird. Liegt kein Angriff vor, überträgt der Nutzer die ergänzte Nutzer-TAN an die Transaktionseinrichtung, welche diese wie beschrieben prüft und im positiven Fall die Transaktion ausführt. In dieser Variante kann zusätzlich eine weitere Bestätigungs-TAN vorgesehen sein, die analog zur bisher beschriebenen Bestätigungs-TAN ausgebildet und dieser über den Index zugeordnet ist. Die Transaktion kann dann mittels dieser weiteren Bestätigungs-TAN - wie in der vorstehend beschriebenen bevorzugten Ausführungsform - den Empfang der korrekten Nutzer-TAN bestätigen. Ein erfolgreicher Angriff auf diese Variante des Verfahrens wird dementsprechend noch unwahrscheinlicher.

Alternativ oder zusätzlich kann die Transaktionseinrichtung den Index in die TAN-Liste in Abhängigkeit von den Transaktionsdaten vorgeben. Beispielsweise bei einer bestimmten Verteilung von Ziffern in den Transaktionsdaten (z. B. viele Nullen in BLZ oder Kontonummer) wählt sie aus den noch unverbrauchten Nutzer-TANs eine Nutzer-TAN aus, bei welcher mit den jeweiligen Positionen der zu ergänzenden Inhalte der Transaktionsdaten eine möglichst große statistische Sicherheit gegen einen Angriff erreicht werden kann. Die Transaktionseinrichtung berechnet also zu allen noch unverbrauchten Nutzer-TANs unter Verwendung der aktuellen Transaktionsdaten die zu erreichende statistische Sicherheit gegen Angriffe aus, und wählt dann diejenige Nutzer-TAN aus, welche die größtmögliche Sicherheit gegen eine Analyse und einen Angriff bietet. Es versteht sich von selbst, dass in diesem Fall die TAN-Liste ausgetauscht wird, bevor diese vollständig aufgebraucht ist, so dass der Transaktionseinrichtung immer einen aureichend großen Pool von unverbrauchten Nutzer-TANs zur Auswahl zur Verfügung steht.

Um die Erfolgswahrscheinlichkeit eines Angriffs auf die Transaktionsdaten weiter herabzusetzen, können an nicht zu ergänzenden, d.h. bereits fixierten Stellen von Nutzer-TANs und Bestätigungs-TANs Zeichen vorgesehen sein, die in Abhängigkeit von bereits durch die Transaktionseinrichtung empfangenen Transaktionsdaten bestimmt werden. Alternativ oder zusätzlich können diese Zeichen auch abhängig von weiteren erwarteten Transaktionsdaten bestimmt werden. Beispielsweise können an nicht zu ergänzenden Stellen einer Nutzer-TAN und/oder einer Bestätigungs-TAN Zeichen, d.h. Ziffern und/oder Buchstaben und dergleichen, gemäß einer Verteilung vorgesehen sein, die im Wesentlichen einer Verteilung der Zeichen solcher Transaktionsdatensätze entspricht, welche die Transaktionseinrichtung bereits während früherer Transaktionen empfangen hat und/oder von dem Nutzerendgerät in späteren Transaktionen noch erwartet. Auf diese Weise kann einer eventuellen Ungleichverteilung von in den Transaktionsdaten auftretenden Zeichen Rechung getragen werden, welche dem Angreifer ansonsten Informationen über die variablen Stellen der entsprechenden TANs und die vorgegebenen Anteile der Transaktionsdaten liefern könnten.

Wie vorstehend beschrieben, kann die TAN-Liste dem Nutzer als gedruckte Liste bereitgestellt werden. Es ist aber auch möglich, dem Nutzer einen TAN-Generator zu überlassen, welcher die TAN-Liste gespeichert hat bzw. die TAN-Liste oder die TAN dynamisch (ohne Indexangabe) erzeugt. Auf Eingabe des vorgegebenen Index zeigt der TAN-Generator dem Nutzer dann die entsprechende Nutzer-TAN und/oder Bestätigungs-TAN - inklusive der zu ergänzenden Stellen - an und erleichtert dem Nutzer dadurch z.B. das Ergänzen der jeweiligen Stellen. Es kann weiterhin vorgesehen sein, dass der TAN-Generator den Nutzer beim Prüfen der empfangenen Bestätigungs-TAN unterstützt, indem er diese nach Eingabe der relevanten Anteile der Transaktionsdaten und des vorgegebenen Index automatisch prüft und dem Nutzer das Ergebnis der Prüfung anzeigt. Ein TAN-Generator kann TANs auch ohne Indexangabe bereitstellen. Zu diesem Zweck sind unterschiedliche TAN-Algorithmen bekannt. So kann die TAN beispielsweise als zeitabhängige oder von einem Initialwert abhängige TAN erzeugt werden oder als eine TAN aus einer Kette von miteinander verknüpften TANs.

In einer besonders bevorzugten Ausgestaltung ist der TAN-Generator als Anwendung auf einer SIM-Karte implementiert. Die Anwendung stellt dabei die erzeugten TANs dem Benutzer auf dem Mobilfunkgerät des Nutzers dar.

Die vorliegende Erfindung wird im Folgenden mit Bezug auf die beiliegenden Zeichnungen beispielhaft erläutert. Darin zeigen:
- Fig. 1: einen Auszug aus einer in einer bevorzugten Ausführungsform des erfindungsgemäßen Verfahrens verwendeten TAN-Liste;
- Fig.2: in der bevorzugten Ausführungsform des Verfahrens auftretende Transaktionsdaten; und
- Fig. 3: Schritte der bevorzugten Ausführungsform des erfindungsgemäßen Verfahrens.

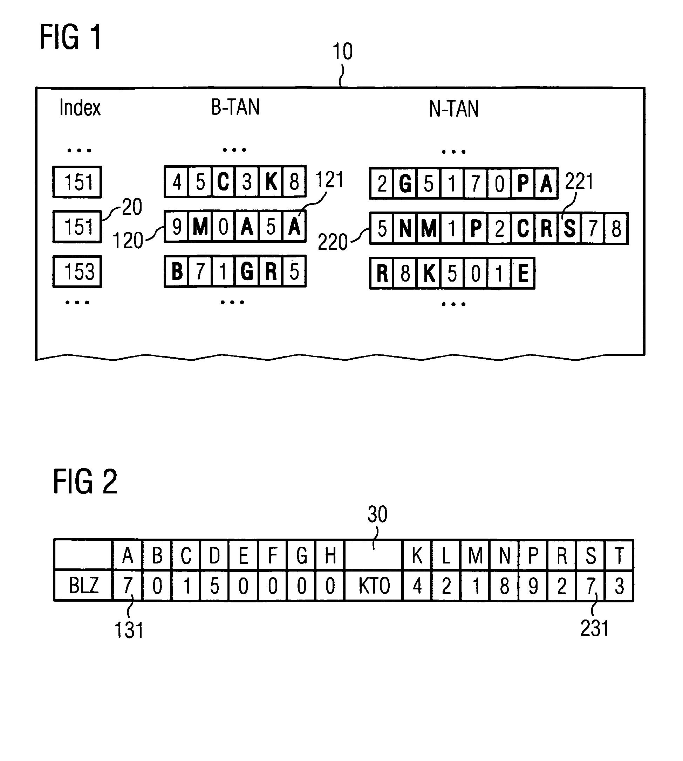

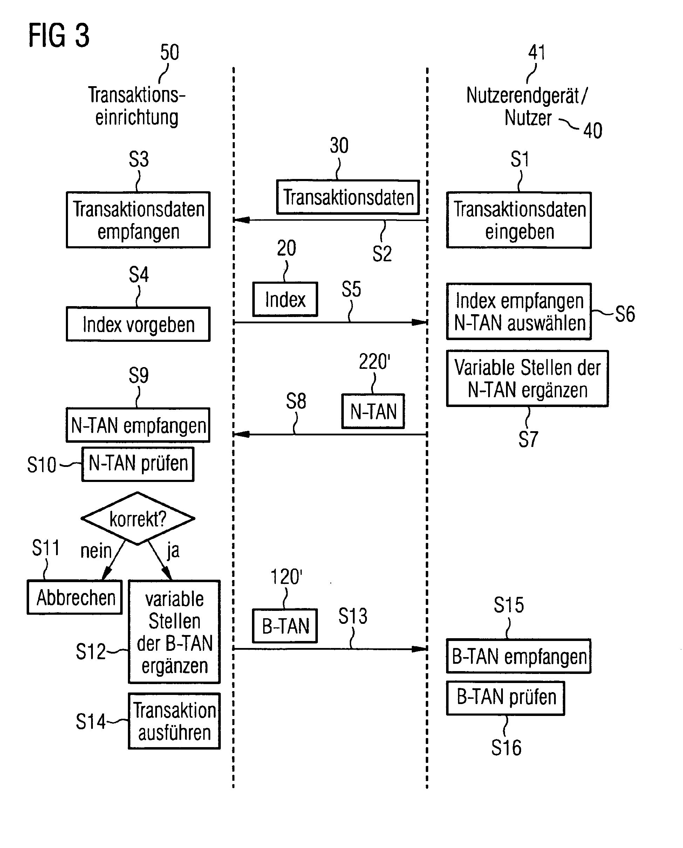

Die Erfindung betrifft ein Verfahren zum Sichern einer elektronischen Transaktion, dessen Schritte mit Bezug auf Fig. 3 nachstehend genauer beschrieben werden. Dabei überträgt ein Nutzer 40 mittels eines Nutzerendgeräts 41 Transaktionsdaten 30 (vgl. Fig. 2) an eine Transaktionseinrichtung 50. Dem Nutzer liegt eine in Fig. 1 beispielhaft gezeigte TAN-Liste 10 vor, welche zu jedem Index 20 zumindest eine Nutzer-TAN 220 (N-TAN) umfasst. Gemäß einem vorgegebenen Index 20 wählt der Nutzer die entsprechende N-TAN 220 aus der TAN-Liste 10 aus. Diese N-TAN 220 umfasst zumindest eine variable, d.h. zu ergänzende Stelle 221, die der Nutzer 40 in Abhängigkeit von einem vorgegebenen Anteil 231 der Transaktionsdaten 30 ergänzt, bevor er die derart ergänzte N-TAN 220' an die Transaktionseinrichtung 50 überträgt. Nachfolgend werden zuerst die TAN-Liste 10 (mit Bezug auf Fig. 1) und die Transaktionsdaten 30 (mit Bezug auf Fig. 2) sowie deren Zusammenspiel detailliert in der Form beschrieben, wie sie in der hier beschriebenen Ausführungsform des bisher lediglich skizzierten Verfahrens Verwendung finden. Mit Bezug auf Fig. 3 wird dann das Verfahren selbst und einige Varianten davon genauer dargestellt.

Mit Bezug auf Figur 1 umfasst eine TAN-Liste 10, wie bereits erwähnt, zu jedem Index 20 eine Bestätigungs-TAN (B-TAN) 120 und eine Nutzer-TAN (N-TAN) 220. Indizes liegen in fortlaufender Nummerierung vor, wobei die Länge der TAN-Liste 10, d.h. der Bereich, in dem der Index 20 läuft, variieren kann. In der TAN-Liste 10 liegen sämtliche B-TANs 120 mit einer identischen Stellenzahl (sechs Stellen) vor, während die N-TANs 220 unterschiedlich viele Stellen aufweisen. Es ist ebenso möglich, auch die B-TANs 120 mit variierenden Stellenzahlen vorzusehen und/oder die N-TANs 220 als jeweils gleichlang vorzusehen. Ebenso kann auf die B-TANs 120 gemäß einer eingeschränkten Variante des Verfahrens komplett verzichtet werden.

Sowohl die B-TANs 120 als auch die N-TANs 220 umfassen jeweils zumindest eine variable, d.h. zu ergänzende Stelle 121, 221 sowie feste, bereits fixierte, nicht mehr zu ergänzende Stellen. B-TANs 120 können aber auch ohne variable Stellen 121 auftreten. Die variablen Stellen 121, 221 sind dabei dadurch vorgegeben, dass sie durch (lateinische) Buchstaben aus der Menge A-T gekennzeichnet sind. Die festen Stellen sind mit Ziffern aus der Menge 0-9 bezeichnet und dadurch vorgegeben. Ebenso ist es möglich, die variablen Stellen 121, 221 in anderer Weise vorzugeben, beispielsweise mittels Zeichen eines anderen Alphabets, durch Farbmarkierungen oder dergleichen. Auf diese Weise kann der für feste Zeichen verwendbare Zeichensatz vergrößert werden, d.h. es können z.B. sowohl Ziffern als auch (lateinische) Buchstaben als feste Stellen von B-TAN 120 und N-TAN 220 verwendet werden.

Sowohl die Anzahl der zu ergänzenden Stellen 121 einer B-TAN 120 als auch die Anzahl zu ergänzender Stellen 221 einer N-TAN 220 sind variabel und unterscheiden sich von Index zu Index. Dasselbe gilt für die Positionen der zu ergänzenden Stellen 121, 221 innerhalb der B-TAN 120 bzw. der N-TAN 220. Ausführungsformen sind möglich, bei denen die Anzahl zu ergänzender Stellen 121, 221 für allen B-TANs 120 und/oder alle N-TANs 220 fest vorgegeben ist. Weiterhin ist es möglich, zu ergänzende Stellen 121, 221 stets an denselben Positionen von B-TANs 120 und/oder N-TANs 220 vorzusehen. Wie nachstehend aus dem mit Bezug auf Fig. 3 beschriebenen Verfahren ersichtlich, erhöhen die zuletzt beschriebenen Ausführungsformen (feste Anzahl variabler Stellen 121, 221, feste Positionen derselben) den Komfort für den Nutzer 40 bei der Verwendung der TAN-Liste 10, reduzieren aber gleichzeitig die Sicherheit des Verfahrens zumindest geringfügig.

Mit Bezug auf Fig. 2 sind Transaktionsdaten 30 veranschaulicht, wie sie in dem mit Bezug auf Fig. 3 zu erläuternden Verfahren auftreten. Diese stellen hier eine Bankleitzahl (BLZ) und eine Kontonummer (KTO) dar und dienen zum Durchführen eines Verfahrens, bei dem eine Banküberweisung ausgeführt wird, die ein Nutzer 40 mittels eines Nutzerendgeräts 41, z.B. einem PC, Notebook, Mobilfunkgerät oder dergleichen, über das Internet bei einer Transaktionseinrichtung 50, z.B. einen Server einer Bank, veranlasst. Die Transaktionsdaten 30 können weitere, nicht gezeigte Anteile umfassen, z.B. einen zu überweisenden Betrag oder dergleichen. Das nachstehend beschriebene Verfahren ist jedoch nicht auf Transaktionen im Online-Banking beschränkt. Anwendungen in vielen anderen Bereichen sind denkbar, beispielsweise für Internetauktionen, für elektronische Bestellung von Waren oder Dienstleistungen und dergleichen.

Die Transaktionsdaten 30 liegen als Zeichenkette "7015000042189273" vor, wobei jedes Zeichen der Zeichenkette mit einem Buchstaben "A" bis "T" gekennzeichnet bzw. indiziert ist. Diese Buchstaben entsprechen den Buchstaben, die die zu ergänzenden Stellen 121, 221 der B-TANs 120 und N-TANs 220 der TAN-Liste 10 aus Fig.1 vorgeben. Ein Buchstabe einer zu ergänzenden Stelle 121, beispielsweise das zweite "A" in der B-TAN 120 zum Index "151" in der TAN-Liste 10 repräsentiert einen Verweis in die Transaktionsdaten 30. Entsprechendes gilt für die variablen Stellen 221 der N-TANs 220. Dieser Verweis "A" gibt den Anteil der Transaktionsdaten 30 vor, in Abhängigkeit dessen die zu ergänzende Stelle 121 der B-TAN 120, also hier deren letzte Stelle, zu ergänzen ist. Der Anteil der Transaktionsdaten 30, auf den dieser Verweis, das "A", verweist, ist die erste Stelle der die Transaktionsdaten 30 repräsentierenden Zeichenkette, da diese mit "A" indiziert ist (vgl. Fig. 2). Sie enthält die Ziffer "7". In analoger Weise gibt der Verweis "M" in der zweiten Stelle der B-TAN 120 die Ziffer "1" der Transaktionsdaten 30 vor, da die Stelle der entsprechenden Zeichenkette, welche mit "M" indiziert ist, die Ziffer "1" enthält. Werden sämtliche zu ergänzenden Stellen 121 der B-TAN 120 zum Index "151" wie beschrieben gemäß der Vorgaben der Verweise ergänzt, so wird aus der noch die variablen Stellen "M", "A" und "A" enthaltenen B-TAN 120 "9 M 0 A 5 A" die ergänzte B-TAN 120' "9 1 0 7 5 7". In analoger Weise wird die N-TAN 220 der Form "5 N M 1 P 2 C R S 7 8" in der ergänzen Form 220' zu "5 8 1 1 9 2 1 2 7 7 8" wegen der Ergänzungen N-8; M-1; P-9; C-1; R-2; S-7.

Die Verweise, welche die zu ergänzenden Stellen 121, 221 der B-TANs 120 und N-TANs 220 vorgeben, können auch auf andere, komplexere Weise gegeben sein und entsprechend komplexere Anteile der Transaktionsdaten 30 vorgeben. Beispielsweise kann eine zu ergänzende Stelle 121 einen Verweis der Art "A-E" oder "A, C, D" umfassen. Ersterer gibt vor, dass die zu ergänzende Stelle mit den Ziffern zu ergänzen ist, die in der Transaktionsdatenzeichenkette an den ersten fünf Stellen stehen, also durch den vorgegebenen Anteil "70150". Im zweiten Fall gibt der Verweis vor, die entsprechende variable Stelle mit den drei Zeichen "715" zu füllen. Andere Arten von Verweisen sind möglich. Denkbar aber weniger benutzerfreundlich ist auch der Einsatz einfacher Rechenvorschriften. Beispielsweise ergibt "A-3" vorliegend "4", "9-C" ergibt "8" und A+M+4 ergibt "12".

Die beschriebenen Verweise können zusätzliche Informationen umfassen. In den bisher beschriebenen Varianten haben die Verweise stets lediglich ein oder mehrere Zeichen der Transaktionsdatenzeichenkette als Anteile 131, 231 vorgegeben, welche dann identisch, also als unveränderte Teilzeichenketten, an die entsprechende Stelle 121, 221 der jeweiligen TAN 120, 220 eingefügt wurden. Es ist möglich, dass die Zeichen, welche den durch den Verweis vorgegebenen Anteil 131, 231 der Transaktionsdaten 30 darstellen, zusätzlich chiffriert werden, bevor sie an der variablen Stelle 121, 221 der B-TAN 120 oder N-TAN 220 ergänzt werden. Ein Verweis der Form "A*" kann beispielsweise zusätzlich vorgeben, dass an der entsprechenden, zu ergänzenden Stelle 121 der durch den Verweis "A" vorgegebene Anteil der Transaktionsdaten "30", in diesem Fall die Ziffer "7", gemäß einer Chiffrier-Tabelle, die mit dem Sonderzeichen "*" bezeichnet ist, chiffriert wird. Hat die Tabelle beispielsweise die nachstehend gezeigte Form, so würde also anstatt der "7" eine "4" an der zu ergänzenden Stelle 121 der B-TAN 120 ergänzt:

### Chiffrier-Tabelle *

- Ausgangszeichen:: 0 1 2 3 4 5 6 7 8 9
- Chiffriertes Zeichen:: 2 3 5 7 9 0 6 4 1 8

Andere Arten von Chiffrier-Tabellen oder Chiffrier-Matrizen sind möglich, beispielsweise zum Durchführen einer Vigenere-Verschlüsselung oder dergleichen. Ebenso ist es möglich, in ähnlicher Weise Buchstaben in Zahlen oder Zahlen in Buchstaben umzucodieren oder ähnliche Transformationen vorzunehmen. Die entsprechenden Chiffrier-Tabellen und dergleichen können dabei auf der TAN-Liste 10 selbst vorliegen oder aber getrennt davon.

Die durch solche speziellen Verweise zusätzlich vorgegebenen Verschlüsselungen oder Chiffrierungen der vorgegebenen Anteile 131, 231 der Transaktionsdaten 30 haben stets den Zweck, es einem Angreifer, der eine Datenkommunikation zwischen dem Nutzerendgerät 41 und der Transaktionseinrichtung 50 belauscht, unmöglich zu machen bzw. zumindest erheblich zu erschweren, die Transaktion zu manipulieren. Das grundlegende Prinzip des Verfahrens beruht darauf, dass es für einen Angreifer nicht erkennbar ist, welche Stellen der von ihm abgefangenen TAN 120, 220 ergänzte Stellen 121, 221 sind und welche feste Stellen sind. Will der Angreifer die Transaktion zu seinen Gunsten manipulieren, beispielsweise die entsprechende Überweisung auf sein Konto umleiten, so muss er einerseits die Transaktionsdaten 30 verändern, aber eben auch die von den geänderten Transaktionsdaten 30 abhängigen ergänzten Stellen 121, 221 der N-TAN 220 bzw. B-TAN 120, da ansonsten ein Angriff von der Transaktionseinrichtung 50 und / oder dem Nutzer 40 sofort erkannt wird. Aufgrund der Kenntnis der belauschten Transaktionsdaten 30 kann der Angreifer gewisse Wahrscheinlichkeiten berechnen, die teilweise Informationen darüber geben, welche Stellen der belauschten TAN 120, 220 eher ergänzte Stellen 121, 221 sind und welche eher feste Stellen sind. Solche Informationen basieren im Wesentlichen auf der Verteilung der Ziffern der Transaktionsdatenzeichenkette und der Verteilung der Ziffern der festen Stellen der TANs 120, 220. Um eine derartige Berechnung des Angreifers zu erschweren, können, wie beschrieben, die Zeichen der vorgegeben Anteile 131, 231 der Transaktionsdaten 30 derartig chiffriert werden, dass eine resultierende Verteilung sich dann ergebender Ziffern einer Verteilung der Ziffern der festen Stellen der TANs 120, 220 möglichst ähnlich ist. Umgekehrt können die festen Stellen der TANs 120, 220 von Beginn an in der TAN-Liste 10 derart festgesetzt werden, dass sie möglichst ähnlich verteilt sind wie Ziffern aus zu erwartenden Transaktionsdaten 30. Beispielsweise wäre zu beachten, dass bei einer beschriebenen Online-Banking-Anwendung die Ziffer "0" in den Transaktionsdaten 30, meist als Teil der Bankleitzahl, überdurchschnittlich häufig auftritt.

Fig. 3 zeigt nun die wesentlichen Schritte einer bevorzugten Ausführungsform des Verfahrens. In einer nicht näher beschriebenen ersten Phase hat der Nutzer 40 über sein Nutzerendgerät 41 eine Datenkommunikationsverbindung über ein Netzwerk, z.B. das Internet und/oder ein Mobilfunknetzwerk, zu einer Transaktionseinrichtung 50, z.B. einem Bank-Server, aufgebaut. Dazu hat der Nutzer eine entsprechende Adresse der Bank angewählt und sich mit seinen Kenndaten (z.B. Login, Passwort) authentisiert.

In einem ersten Schritt S1 gibt der Nutzer 40 die Transaktionsdaten 30 in das Nutzerendgerät 41 ein und überträgt diese in einem zweiten Schritt S2 an die Transaktionseinrichtung 50. Diese Datenübertragung erfolgt in der Regel verschlüsselt. Es ist jedoch möglich, dass das Nutzerendgerät 41 des Nutzers 40 von Schadcode, z.B. einem Trojaner oder dergleichen, befallen ist, mittels dessen ein Angreifer versucht, die durchzuführende Transaktion zu manipulieren. Der Trojaner kann dabei den gesamten Datenverkehr zwischen dem Nutzerendgerät 41 und der Transaktionseinrichtung 50 (unverschlüsselt) lesen und/oder verändern.

In Schritt S3 empfängt die Transaktionseinrichtung 50 die Transaktionsdaten 30 und bestimmt in Schritt S4 einen Index 20 der TAN-Liste 10, beispielsweise den in Fig.1 gezeigten Index "151", zufällig aus der Menge der noch verfügbaren Indices, d.h. der Indices, die noch in keiner früheren Transaktion mit dem Nutzer 40 vorgegeben worden sind. Sobald auf der dem Nutzer 40 von der Bank bereitgestellten TAN-Liste nur noch eine gewisse Mindestanzahl von noch nicht verwendeten Indices vorliegt, stellt die Bank dem Nutzer 40 eine neue TAN-Liste bereit. Gemäß einer verfeinerten Ausführungsform des Verfahrens, bei der dem Nutzer 40 vorzugsweise eine sehr lange TAN-Liste 10 bereitgestellt wird, d.h. eine TAN-Liste 10 mit sehr vielen TANs 120, 220, gibt die Transaktionseinrichtung 50 den Index 20 nicht zufällig, sondern derart vor, dass die dem Index 20 zugeordneten TANs 120, 220 auf ihren festen Stellen mit solchen Ziffern besetzt sind, die einem Angreifer das Erraten der zu ergänzenden Stellen 121, 221- abhängig von den aktuellen Transaktionsdaten 30 - besonders schwer macht, d.h. einen erfolgreichen Angriff so gut wie ausschließt. Die Transaktionseinrichtung 50 berechnet dazu beispielsweise die in dieser Hinsicht besten 10 oder 20 Indices und wählt dann einen davon geeignet, z.B. zufällig, aus. Dabei erkennt die Transaktionseinrichtung 50 gleichzeitig, wenn die noch verbleibenden TANs 120, 220 auf der TAN-Liste 10 des Nutzers 40 keine ausreichende statistische Qualität mehr besitzen, d.h. wenn es dem Angreifer aufgrund der Verteilung der festen Ziffern der TANs 120, 220 mit gewisser Wahrscheinlichkeit gelingen könnte, einzelne variable Stellen 121, 221 korrekt zu erraten. In diesem Fall wird dem Nutzer 40 eine neue TAN-Liste bereitgestellt und die bisher gültig TAN-Liste 10 wird gesperrt. Die Transaktionseinrichtung 50 überträgt den vorgegebenen Index 20 in Schritt S5 an das Nutzerendgerät 41.

In Schritt S6 empfängt das Nutzerendgerät 41 den Index 20 und der Nutzer 40 wählt die durch den Index 20 vorgegebene N-TAN 220 aus der TAN-Liste 10 aus. In Schritt S7 ergänzt der Nutzer 40 in der vorstehend mit Bezug auf die Fig.1 und 2 beschriebenen Weise die zu ergänzenden Stellen 221 gemäß den Vorgaben der darin enthaltene Verweise in Abhängigkeit der durch die Verweise vorgegebenen Anteile 231 der Transaktionsdaten 30. Um dem Nutzer 40 diese Aufgabe zu erleichtern, können die Transaktionsdaten 30 auf einer Anzeigeeinrichtung, z.B. einem Display, des Nutzerendgeräts 41, in der in Fig. 2 gezeigten Weise angezeigt werden. Der Nutzer 40 hat dann jedoch darauf zu achten, dass die angezeigten Daten mit den von ihm in Schritt S1 eingegebenen Transaktionsdaten 30 übereinstimmen. Anderenfalls könnte der Angreifer eine solche Anzeige dazu nutzen, dem Nutzer 40 veränderte Transaktionsdaten anzuzeigen, woraufhin der Nutzer 40 die variablen Stellen 121 der N-TAN 120 eventuell versehentlich abhängig von den veränderten Transaktionsdaten ergänzen würde.

In Schritt S8 überträgt der Nutzer 40 die ergänzte N-TAN 220' mittels des Nutzerendgeräts 41 an die Transaktionseinrichtung 50. Wie erwähnt ist es für den Angreifer nicht möglich zu erkennen, welche Stellen der N-TAN 220 vom Nutzer 40 abhängig von der Transaktionsdaten 30 ergänzt worden sind, da er lediglich die gesamte ergänzte N-TAN 220' "sehen" kann.

Die Transaktionseinrichtung 50 empfängt in Schritt S9 die ergänzte N-TAN 220' und prüft in Schritt S10, ob die zu ergänzenden Stellen 221 tatsächlich korrekt in Abhängigkeit der durch die Verweise vorgegebenen Anteile 231 der Transaktionsdaten 30 ergänzt worden sind. Ist dies nicht der Fall, so geht die Transaktionseinrichtung 50 von einem Angriff auf die Transaktion aus und bricht das Verfahren in Schritt S11 ab. Es kann vorgesehen sein, dass der Nutzer 40 eine entsprechende Fehlermeldung erhält. Liegt jedoch tatsächlich ein Angriff vor, so würde der Angreifer eventuell versuchen, die Fehlermeldung abzufangen, um den Angriff zu vertuschen.

Sind nach Ansicht der Transaktionseinrichtung 50 die ergänzten Stellen 221 der empfangenen N-TAN 220' korrekt ergänzt worden, so liegt aller Wahrscheinlichkeit nach kein Angriff vor. Die Transaktionseinrichtung 50 wählt in Schritt S12 die zum vorgegebenen Index 20 gehörende B-TAN 120 und ergänzt die darin vorkommenden variablen Stelle 121 in Abhängigkeit von den entsprechenden Verweisen darin, welche die weiteren Anteile 131 der Transaktionsdaten 30 vorgeben, die in die variablen Stellen 121 einzutragen sind. Wiederum ist es für den Angreifer nicht möglich zu erkennen, welche Stellen der B-TAN 120 von der Transaktionseinrichtung 50 abhängig von der Transaktionsdaten 30 ergänzt worden sind, da der Angreifer lediglich die ergänzte B-TAN 120' vorliegen hat. Schließlich überträgt die Transaktionseinrichtung 50 die derart ergänzte B-TAN 120' in Schritt S13 an das Nutzerendgerät 41 und führt in Schritt S14 die durch die Transaktionsdaten 30 definierte Transaktion aus, im beschriebenen Beispiel also die Überweisung.

Der Nutzer 40 prüft die in Schritt S15 von der Transaktionseinrichtung 50 empfangene ergänzte B-TAN 120' in Schritt S16. Dabei prüft er insbesondere, ob die zu ergänzenden Stellen 121 der B-TAN 120, wenn sie gemäß der Vorgaben der Verweise in Abhängigkeit von den vorgegebenen Anteilen 131 der Transaktionsdaten 30 ergänzt werden, tatsächlich mit den in der empfangenen B-TAN 120' ergänzten Stellen 121 übereinstimmen. Ist dies der Fall, so kann der Nutzer 40 davon ausgehen, dass die Transaktion gemäß den von ihm in Schritt S2 übertragenen Transaktionsdaten ausgeführt worden ist. Ist dies jedoch nicht der Fall oder empfängt der Nutzer 40 überhaupt keine B-TAN 120', so kann er von einem Angriff auf die Transaktion ausgehen.

Verschiedene Variationen der beschriebenen Ausführungsform sind möglich. So kann beispielsweise auch der Nutzer 40 selbst den Index 20 vorgeben, indem er einen noch verfügbaren Index 20 in einer der vorstehend beschriebenen Weisen bestimmt. Es ist auch möglich, dass er die Transaktionseinrichtung 50 auffordert, ihm einen Index 20 vorzugeben. Anschließend kann der Nutzer 40 dann die Transaktionsdaten 30 und die ergänzte N-TAN 220' zusammen mit dem Index 20 an die Transaktionseinrichtung 50 übertragen. Diese Ausführungsform liefert ein besonders sicheres Verfahren, wenn der Nutzer 40 die ergänzte N-TAN 220' an die Transaktionseinrichtung 50 überträgt, bevor er auch die Transaktionsdaten 30 in das Nutzerendgerät 41 eingibt und an die Transaktionseinrichtung 50 überträgt. Ohne Kenntnis der Transaktionsdaten 30 ist es für einen Angreifer noch wesentlich schwerer, die zu ergänzenden Stellen der N-TAN 220 korrekt zu erraten.

Gemäß einer weiteren Variante kann die Transaktionseinrichtung 50 die Schritte S12 und S13, also das Übertragen der ergänzten B-TAN 120', vorziehen und bereits zusammen mit dem Schritt S5, den Übertragen des Index 20, ausführen. Der Nutzer 40 kann dann bereits an dieser Stelle erkennen, ob die Transaktionsdaten 30 korrekt bei der Transaktionseinrichtung 50 angekommen sind. Ist dies nicht der Fall, erkennt der Nutzer einen Angriff sofort und beendet das Verfahren. Im positiven Fall überträgt er wie mit Bezug auf Schritt S8 beschrieben die ergänzte N-TAN 220' an die Transaktionseinrichtung 50, welche, wenn die Prüfung gemäß Schritt S10 positiv verläuft, die Transaktion wie in Schritt S14 ausführt. Die vorgezogenen Schritte S12 und S13 können in Form analoger Schritte unter Verwendung einer weiteren B-TAN (nicht gezeigt) erneut an der ursprünglichen Stelle des Verfahrens, also nach dem Empfangen und Prüfen der ergänzten N-TAN 220', durchgeführt werden.

Die TAN-Liste 10 kann dem Nutzer 40, wie in den beschriebenen Verfahren, als eine auf Papier oder dergleichen gedruckte Liste bereitgestellt werden. Es ist jedoch gleichfalls möglich, dem Nutzer 40 einen TAN-Generator (nicht gezeigt) bereitzustellen. Dazu kann dem Nutzer 40 eine Applikation, die beispielsweise auf einem Mobilfunkendgerät oder dergleichen, ausgeführt werden kann, bereitgestellt werden. Diese Applikation kann auf eine auf dem entsprechenden Gerät gespeicherte TAN-Liste 10 zugreifen oder diese dort dynamisch erzeugen. Der Nutzer 40 sollte dann allerdings aus Sicherheitsgründen die Datenkommunikationsverbindung zu der Transaktionseinrichtung 50 mit einem von diesem Gerät verschiedenen Nutzerendgerät 41 herstellen. Ebenso kann der TAN-Generator als eigenständiges Gerät, beispielsweise in Form eines Token oder einer Chipkarte mit Display, zur Verfügung gestellt werden, auf dem die TAN-Liste 10 gespeichert ist oder dynamisch erzeugt werden kann. Auf Eingabe des vorgegebenen Index 20 durch den Nutzer 40 zeigt der entsprechende TAN-Generator die dem Index 20 zugeordnete B-TAN 120 und N-TAN 220, inklusive der zu ergänzenden Stellen, an. Weiter kann der TAN-Generator ausgebildet sein, auf Eingabe der relevanten Anteile der Transaktionsdaten 30 den Schritt S16 des Prüfens zu unterstützen und dem Nutzer 40 das entsprechende Ergebnis anzuzeigen.

Zusammenfassend erhöht das beschriebene Verfahren in jeder seiner Ausführungsformen die Sicherheit einer über ein Datenkommunikationsnetzwerk übertragenen Transaktion im Vergleich zu herkömmlichen iTAN-Verfahren erheblich. Erst durch die Verwendung transaktionsabhängiger N-TANs 220 kann die Verwendung einer B-TAN 120 sicher eine Aussage über eine korrekt durchgeführte Transaktion machen. Das Verfahren benötigt keine weitere technische Infrastruktur, ist also insbesondere nicht abhängig von deren Verfügbarkeit und Zuverlässigkeit. Es verursacht also auch keine weiteren Kosten und ist umweltfreundlich, da keine zusätzlichen wertvollen Ressourcen verbraucht werden. Weiterhin müssen bisher verwendete, herkömmlich iTAN-Verfahren lediglich geringfügig angepasst werden. Dies hält den Änderungsbedarf auf Seiten der Transaktionseinrichtung 50 gering, und damit die verursachten Kosten. Der Nutzer 40 kann sich gleichfalls schnell an das neue Verfahren gewöhnen, da es herkömmlichen iTAN-Verfahren prinzipiell sehr ähnlich ist und sein zusätzlicher Sicherheitsgewinn leicht einzusehen ist, auch da das Verfahren keine technisch versteckten Komponenten umfasst, die der Nutzer 40 eventuell nicht nachvollziehen kann. Schließlich bietet das Verfahren einen guten Schutz gegen Phishing-Angriffe, da es einem Nutzer 40 als eher ungewöhnlich auffällt, wenn er eine N-TAN 220 mit variablen, zu ergänzenden Stellen 221 eingeben soll. Als besonders vorteilhaft ist es schließlich anzusehen, dass das Verfahren beliebig skalierbar ist, d.h. Nutzerkomfort und Sicherheit können anhand der Länge der verwendeten TANs 120, 220 sowie der Anzahl und Position der vorgesehenen variablen Stelle 121, 221 nach Belieben gegeneinander abgewogen werden. Ist z.B. für eine spezifische Transaktion eine besonders hohe Sicherheitsstufe vorgesehen, können entsprechend TANs größerer Länge und/oder mit einer Mehrzahl zu ergänzender Stellen Verwendung finden.

## Patentansprüche

1. Verfahren zum Sichern einer Transaktion mit Hilfe einer Transaktionsnummer (TAN), wobei die für Transaktionsdaten der Transaktion zu prüfende TAN eine transaktionsspezifische TAN (120',220') ist, mit dem Schritt:
Bereitstellen (S6) einer mehrstelligen TAN,
wobei aus der bereitgestellten TAN (120,220) gemäß einer Vorgabe und mit Hilfe der Transaktionsdaten (30) der Transaktion die zu prüfende TAN (120', 220') zu bilden ist, und
wobei die Vorgabe zumindest teilweise in der bereitgestellten TAN (120,220) enthalten ist.

2. Verfahren nach Anspruch 1, **dadurch gekennzeichnet, dass** die Vorgabe derart einfach gewählt ist, dass ein Nutzer (41) die zu prüfende, transaktionsspezifische TAN (120',220') bilden kann.

3. Verfahren nach einem der Ansprüche 1 oder 2, **dadurch gekennzeichnet, dass** die bereitgestellte TAN (120,220) zumindest eine zu ergänzende Stelle (121,221) enthält, wobei die bereitgestellte TAN (120,220) die zu ergänzende Stelle vorgibt.

4. Verfahren nach einem der Ansprüche 1 bis 3, **dadurch gekennzeichnet, dass** die bereitgestellte TAN (120,220) als die Vorgabe einen Verweis auf zumindest einen Anteil (131,231) der Transaktionsdaten (30) enthält.

5. Verfahren nach einem der Ansprüche 1 bis 4, **dadurch gekennzeichnet, dass** die bereitgestellte TAN (120,220) als die Vorgabe die Weise angibt, in der die transaktionsspezifische TAN (120',220') aus der bereitgestellten TAN (120,220) zu bilden ist.

6. Verfahren nach einem der Ansprüche 3 bis 5, **dadurch gekennzeichnet, dass** die transaktionsspezifische TAN (120',220') zu bilden ist durch Ersetzen der zu ergänzenden Stelle durch ein einzelnes Zeichen einer Zeichenkette, welche die Transaktionsdaten (30) repräsentieren.

7. Verfahren nach einem der Ansprüche 1 bis 6, **dadurch gekennzeichnet, dass** eine Transaktionseinrichtung (50) die transaktionsspezifische TAN als Nutzer-TAN (N-TAN - 220') prüft (S10).

8. Verfahren nach einem der Ansprüche 1 bis 6, **dadurch gekennzeichnet, dass** ein Nutzer (41) die transaktionsspezifische TAN als eine TAN einer Transaktionseinrichtung (Bestätigungs-TAN -120') prüft (S16).

9. Verfahren nach einem der Ansprüche 1 bis 8, **gekennzeichnet durch** Auswählen der bereitzustellenden TAN (120,220) für eine Transaktion aus einer TAN-Liste (10) mit mehrstelligen TANs.

10. Verfahren nach Anspruch 9, **dadurch gekennzeichnet, dass** die TAN-Liste eine Vielzahl von Nutzer-TANs (220) und zugeordneten Bestätigungs-TANs (120) enthält, wobei durch den Schritt des Auswählens eine Nutzer-TAN und eine Bestätigungs-TAN bereitgestellt werden und für diese beiden bereitgestellten TANs (120,220) jeweils eine entsprechende transaktionsspezifische TAN (120',220') gebildet wird.

11. Verfahren nach Anspruch 9 oder 10, **dadurch gekennzeichnet, dass** ein Index (20) für eine indizierte TAN-Liste in Abhängigkeit abhängig von den Transaktionsdaten (30) vorgegeben wird.

12. Verfahren nach einem der Ansprüche 1 bis 11, **dadurch gekennzeichnet, dass** TANs derart bereitgestellt wird, dass verschiedene TANs (120, 220) unterschiedlich viele Stellen aufweisen und/oder unterschiedlich viele zu ergänzende Stellen (221;121) aufweisen und/oder an unterschiedlichen Positionen zu ergänzende Stellen (221;121) aufweisen.

13. Verfahren nach einem der Ansprüche 1 bis 12, **gekennzeichnet durch** die Schritte in einer Transaktionseinrichtung (50):
- Empfangen (S3) der Transaktionsdaten (30);
- Empfangen (S9) der transaktionsspezifischen TAN (220') als Nutzer-TAN;
- Prüfen (S10) einer Übereinstimmung zwischen der empfangenen Nutzer-TAN (220') und einer für die Transaktion erwarteten Nutzer-TAN (220'); und
- Ausführen (S14) einer **durch** die empfangenen Transaktionsdaten (30) definierten Transaktion, sofern die Übereinstimmung vorliegt.

14. Verfahren nach einem der Ansprüche 1 bis 13, **gekennzeichnet durch** Prüfen (S16) einer Übereinstimmung zwischen der transaktionsspezifischen Bestätigungs-TAN (120'), die als TAN einer Transaktionseinrichtung (50) empfangen wird, und der bereitgestellten Bestätigungs-TAN (120) unter Berücksichtigung der Transaktionsdaten (30).

15. Verfahren nach einem der Ansprüche 1 bis 14, **dadurch gekennzeichnet, dass** die TAN-Liste (10) derart bereitgestellt wird, dass an nicht zu ergänzenden Stellen der angezeigten TAN (120, 220) Zeichen gemäß einer Verteilung vorgesehen sind, welche im Wesentlichen einer Verteilung der Zeichen von Transaktionsdaten (30) entspricht, die bereits durch die Transaktionseinrichtung (50) empfangen worden sind und/oder von dem Nutzerendgerät (41) noch erwartet werden.

16. Verfahren nach einem der Ansprüche 1 bis 15, **dadurch gekennzeichnet, dass** dem Nutzer die TAN in Form einer gedruckten TAN-Liste bereitgestellt wird oder dass ein TAN-Generator dem Nutzer in dem Schritt des Bereitstellens die TAN (10) anzeigt.

17. Tragbarer Datenträger der eingerichtet ist, als TAN-Generator eine TAN für ein Verfahren nach einem der Ansprüche 1 bis 16 bereit zu stellen.

18. System umfassend eine Transaktionseinrichtung und einen TAN-Generator oder eine TAN-Liste, wobei das System angepasst ist zur Durchführung eines Verfahrens nach einem der Ansprüche 1 bis 16.
